(19) 

**Europäisches Patentamt**
**European Patent Office**
**Office européen des brevets**

(11) **EP 4 768 880 A1**

(12) 

# EUROPEAN PATENT APPLICATION

(43) Date of publication:
01.07.2026 Bulletin 2026/27

(21) Application number: 25221666.8

(22) Date of filing: 09.12.2025

(51) International Patent Classification (IPC):
*G01L 5/00* (2006.01)     *H01M 10/42* (2006.01)

(52) Cooperative Patent Classification (CPC):
G01L 5/0052; H01M 10/4285

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 27.12.2024 KR 20240198753

(71) Applicant: SAMSUNG SDI CO., LTD.
Yongin-si, Gyeonggi-do 17084 (KR)

(72) Inventors:
• KU, Heeyeon
17084 Giheung-gu, Yongin-si, Gyeonggi-do (KR)
• KIM, Minhyuk
17084 Giheung-gu, Yongin-si, Gyeonggi-do (KR)

(74) Representative: Gulde & Partner
Patent- und Rechtsanwaltskanzlei mbB
Berliner Freiheit 2
10785 Berlin (DE)

(54) **DEVICE FOR MEASURING PRESSURE OF BATTERY CELL**

(57)     A device (1) for measuring pressure of a battery cell (10) includes: a lower substrate (300) configured to accommodate a battery cell (10) thereon; an upper substrate (200) spaced apart from the lower substrate (300); a connection shaft (100) vertically coupling the lower substrate (300) and the upper substrate (200); and a first load cell (220) configured to measure force applied to the upper substrate (200).

FIG. 4

**EP 4 768 880 A1**

**Description**

**BACKGROUND**

**1. Field**

Aspects of embodiments of the present disclosure relate to a device for measuring pressure of a battery cell.

**2. Description of the Related Art**

Secondary batteries are batteries that are designed to be charged and discharged, different from primary batteries, which are not designed to be recharged. Low-capacity secondary batteries are used in small, portable electronic devices, such as smartphones, feature phones, laptops, digital cameras, and camcorders, while high-capacity secondary batteries are widely used as power sources for driving motors in hybrid cars, electric cars, or the like, and as power storage batteries. A secondary battery generally includes an electrode assembly having a positive electrode and a negative electrode, a case accommodating the electrode assembly, electrode terminals connected to the electrode assembly, and/or the like.

The information disclosed in this Background section of the present disclosure is intended to improve understanding of the background of the present disclosure, and therefore, it may include information that does not constitute related (or prior) art.

**SUMMARY**

Embodiments of the present disclosure provide a device for measuring pressure of a battery cell for manufacturing a battery module and a pack having improved stability and volume efficiency.

However, aspects and features of the present disclosure are not limited to those described above, and other aspects and features not mentioned may be clearly understood by those skilled in the art from the description of the present disclosure described below.

According to an embodiment of the present disclosure, a device for measuring pressure of a battery cell includes: a lower substrate configured to accommodate a battery cell thereon; an upper substrate spaced apart from the lower substrate; a connection shaft vertically coupling the lower substrate and the upper substrate; and a first load cell configured to measure force applied to the upper substrate. The pressure of the battery cell may be a pressure inside the battery cell, i.e. an internal pressure of the battery cell. Hence, it is easily possible to determine pressure of a battery cell for burn-in operations of battery cells, testing and construction purposes. During burn-in operations of battery cells, the battery cells can be heated to simulate a thermal runaway. Battery cells that withstand certain temperatures and, i.e. internal pressure, pass the burn-in operation.

Battery cells may have a vent portion on an upper surface thereof. An advantage of this embodiment may be that in case the pressure of the battery cell gets too high, gas can be vented from inside the battery cell to outside the battery cell through the vent portion.

According to an embodiment, the first load cell may be vertically alignable or aligned with a vent portion of a battery cell (or vice versa) when the device is used with a battery cell having a vent portion. An advantage of this embodiment may be that deformation of the vent portion when pressure of the battery cell rises, or pressure caused by gas escaping the battery cell via the vent portion can be easily measure.

According to an embodiment, the connection shaft may be adjustable in length. An advantage of this embodiment may be that differently sized of battery cells can be used with the device.

According to an embodiment, the first load cell may be on an upper surface of the upper substrate. An advantage of this embodiment may be that vent portions of battery cells comprising a vent portion face upwards, i.e. against gravity, such that spilling of liquids from the battery cell in case the vent portion breaks can at least be reduced or even avoided.

According to an embodiment, the device may further include a second load cell configured to measure force applied to the lower substrate. An advantage of this embodiment may be that changes of downward pressure on the device caused by gravity and optionally by gas exiting the battery cell at high speeds through the vent portion can be measured easily.

According to an embodiment, the second load cell may be on an upper surface of the lower substrate. An advantage of this embodiment may be that the battery cell can simply be put onto the second load cell.

According to an embodiment, the device may further include a controller configured to calculate a height of the upper substrate by using the force measured by the first load cell and the force measured by the second load cell. The height of the upper substrate may be the vertical distance to a reference point or to the lower substrate. An advantage of this embodiment may be that battery cells of different sizes can easily be tested in a reproducible manner, e.g. with the same or at least similar clamping pressure acting onto the battery cell by the upper and the lower substrates.

According to an embodiment, the controller may be configured to calculate a height of the upper substrate by using the Navier-Stokes Equation. An advantage of this embodiment may be that using the Navier-Stokes Equation allows the controller to calculate the height of the upper substrate with improved accuracy, since the equation reflects the actual pressure and velocity distribution of the fluid. By incorporating sensor data (e.g. pressure or flow measurements) directly into the Navier-Stokes model, the calculation becomes physically consistent and more reliable. Furthermore, this approach is robust to changes in fluid properties or operating conditions, thereby improving the stability of the device.

According to an embodiment, the controller may be configured to adjust a length of the connection shaft based on the calculated height of the upper substrate. An advantage of this embodiment may be that that battery cells of different sizes can automatically be clamped in the device in a reproducible manner, e.g. with same or at least similar clamping pressures acting onto the battery cell by the upper and the lower substrates.

According to an embodiment, the device may comprise a jig that may be configures to mount a battery cell thereon. The jig may comprise the lower substrate, the upper substrate above the lower substrate, the first load cell on the upper substrate and optionally the second load cell on the lower substrate and configured to measure a weight of the battery cell. The jig may further comprise the connection shaft connecting the lower substrate to the upper substrate. An advantage of this embodiment may be that the jig may provide more mechanical stability and may better absorb mechanical forces caused by testing a battery cell in the device.

According to an embodiment, a separation distance between the battery cell and the upper substrate may be in a range of 5 mm to 20 mm, e.g. more than 5 mm, up to 7 mm, up to 9 mm, up to 11 mm, up to 13 mm, up to 15 mm, up to 17 mm, up to 19 mm or up to 20 mm. For example, when the device is in use and a battery cell is played on the lower substrate, the controller may be configured to adjust the position of the upper substrate such that the separation distance between the battery cell and the upper substrate in a range of 5 mm to 20 mm, e.g. more than 5 mm, up to 7 mm, up to 9 mm, up to 11 mm, up to 13 mm, up to 15 mm, up to 17 mm, up to 19 mm or up to 20 mm. An advantage of this embodiment may be that gas can safely exit the battery cell via its vent portion without any unnecessary pressure increase by too small separation distances.

According to an embodiment, the upper substrate may be configured to be replaceable. For example, the upper substrate may be configured to be readily and e.g. toolless replaceable. An advantage of this embodiment may be that damaged upper substrates can be replaced easily or that the device can be adapted for use with differently shaped battery cells.

According to another embodiment of the present disclosure, a device for measuring pressure of a battery cell includes: a jig configured to mount a battery cell thereon and a controller configured to control an operation of the jig. The jig includes: a lower substrate; a second load cell on the lower substrate and configured to measure a weight of the battery cell; an upper substrate above the lower substrate; a first load cell on the upper substrate; and a connection shaft connecting the lower substrate to the upper substrate. The controller is configured to calculate a height of the upper substrate from a force measured by the first load cell and a force measured by the second load cell. The pressure of the battery cell may be a pressure inside the battery cell, i.e. an internal pressure of the battery cell. Hence, it is easily possible to determine pressure of a battery cell for testing and construction purposes.

According to an embodiment, the first load cell may be adapted to measure deformation and/or vibration of the upper substrate caused by the battery cell and or by gas exiting the battery cell, e.g. via the vent portion thereof, and flowing against the upper substrate. Alternatively, the battery cell and/or the gas can exert pressure directly against the first load cell.

**BRIEF DESCRIPTION OF THE DRAWINGS**

The following drawings attached to the specification schematically illustrate exemplary embodiments of the present disclosure. Together with the detailed description of the present disclosure described below, the exemplary embodiments describe aspects and features of the present disclosure. Therefore, the present disclosure should not be interpreted as being limited to matters and configurations described in the drawings, in which:

FIG. 1 is a schematic diagram illustrating a device for measuring pressure of a battery according to an embodiment of the present disclosure;

FIG. 2 is a perspective view of the battery cell shown in FIG. 1;

FIG. 3 is a cross-sectional view taken along the line III-III' in FIG. 2;

FIGS. 4 and 5 illustrate a device for measuring pressure of a battery cell according to another embodiment of the present disclosure;

FIG. 6 is an illustration showing an operation of a connection shaft of a device for measuring pressure of a battery cell according to another embodiment of the present disclosure; and

FIG. 7 is a block diagram of a device for measuring pressure of a battery cell according to another embodiment of the present disclosure.

## DETAILED DESCRIPTION

Hereinafter, embodiments of the present disclosure will be described, in detail, with reference to the attached drawings. Terms or words used in the specification and claims should not be interpreted as being limited to their usual or dictionary meanings but should be interpreted as having meanings and concepts that conform to the technical idea of the present disclosure based on the principle that the inventor may appropriately define the concept of a term to explain his or her own disclosure in the best way. The embodiments described in the specification and the configurations illustrated in the drawings are some of embodiments of the present disclosure and do not represent all of the embodiments of the present disclosure. It should be understood that there may be various modified examples that may replace them at the time of filing the application.

In some embodiments, when used herein, the words "comprise", "include" and/or "comprising", "including" specify the presence of stated features, numbers, steps, operations, members, elements, and/or groups thereof but do not exclude the presence or addition of one or more other features, numbers, operations, members, elements, and/or groups thereof.

In some embodiments, to aid understanding of the present disclosure, the attached drawings may not be drawn to an actual scale and the dimensions of some components may be exaggerated. In some embodiments, which are different from each other, the same reference numbers may be assigned to the same components.

Although the terms first, second, or the like are used to describe various components, these components are not limited by these terms. These terms are only used to distinguish one component from another, and unless otherwise stated, it is of course the case that a first component may also be a second component.

Throughout the specification, unless otherwise specifically stated, each component may be singular or plural.

Any configuration being arranged "at the top (or bottom) of" a component or "on (or below)" a component may mean not only that any configuration is arranged in contact with the upper surface (or lower surface) of the component, but also that other configurations may be interposed between the component and any configuration arranged on (or under) the component.

In some embodiments, in case that it is described that a component is "connected," "coupled," or "linked" to another component, it should be understood that the components may be directly connected or linked to each other but that other components may also be "interposed" between each component or that each component may be "connected," "coupled," or "linked" through other components. In some embodiments, when it is described that a part is electrically coupled to another part, this may include not only cases where they are directly connected but also cases where they are connected to each other with another element interposed therebetween.

As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

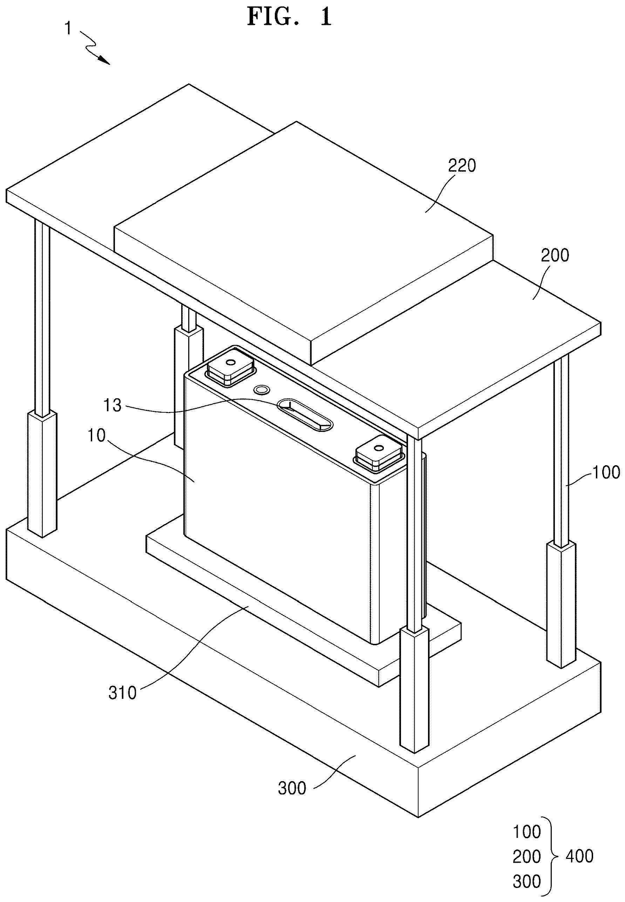

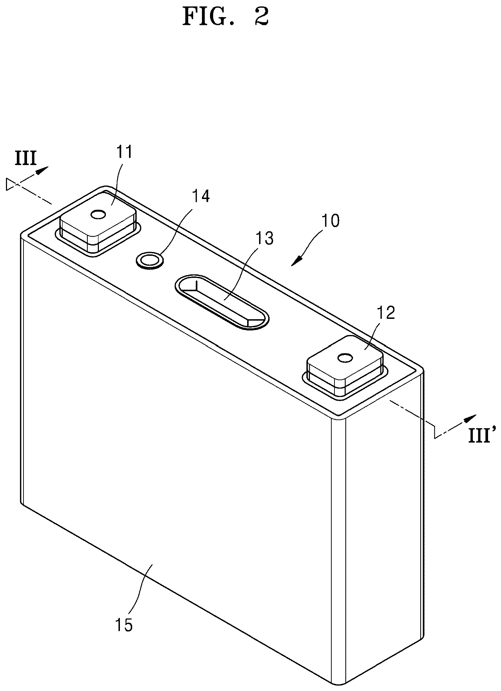

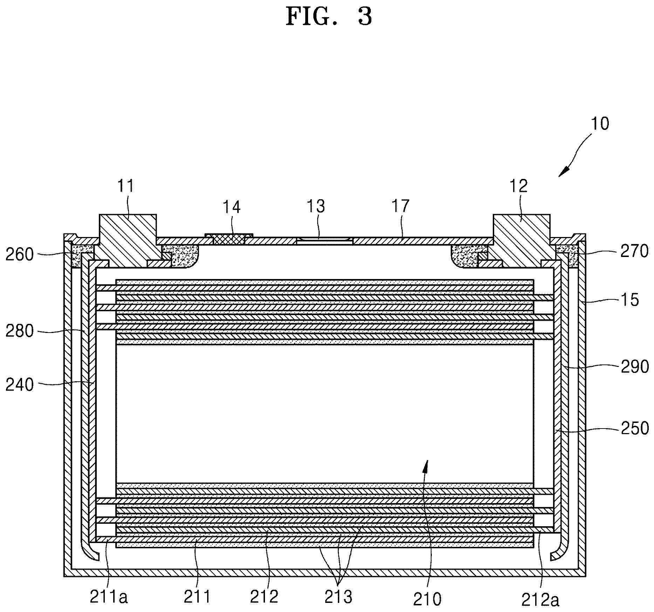

FIG. 1 is a schematic diagram of a device for measuring pressure of a battery cell according to an embodiment of the present disclosure, FIG. 2 is a perspective view of the battery cell shown in FIG. 1, and FIG. 3 is a cross-sectional view taken along the line III-III' in FIG. 2. The pressure of the battery cell may be a pressure inside the battery cell, i.e. an internal pressure of the battery cell.

Referring to FIGS. 1 to 3, a device 1 for measuring pressure of a battery cell, according to an embodiment, may include a lower substrate 300 on which a battery cell 10 is arranged, an upper substrate 200 spaced apart from the lower substrate 300, and connection shafts 100 connecting the lower substrate 300 to the upper substrate 200.

The battery cell 10 arranged on the lower substrate 300 may include one or more electrode assemblies 210 in which a separator 213, which is an insulator, is interposed between a positive electrode 211 and a negative electrode 212, all of which are then wound together, and a case 15 accommodating the electrode assembly 210.

The battery cell 10, according to an embodiment, may be a square (e.g., prismatic) lithium-ion battery cell as an example. However, the present disclosure is not limited thereto, and embodiments of the present disclosure may be applied to various types of battery cells, such as lithium polymer battery cells, cylindrical battery cells, etc.

The positive electrode 211 and the negative electrode 212 may each have a coated portion, which is an area at where an active material is applied to a current collector formed of a metal foil as a thin plate, and non-coated portions 211a and 212a, which are areas at where the active materials are not coated (e.g., are not present).

The positive electrode 211 and the negative electrode 212 may be wound with the separator 213, which is an insulator, interposed therebetween. However, the present disclosure is not limited thereto, and the electrode assembly 210 may have a structure in which the positive electrode 211 and the negative electrode 212, each including a plurality of sheets, are alternately laminated with the separator 213 interposed between adjacent sheets.

The case 15 may form the overall appearance of the battery cell 10 and may include (or may be formed of) a conductive metal, such as aluminum, an aluminum alloy, or nickel-plated steel. In some embodiments, the case 15 may form (or may provide) a space in which the electrode assembly 210 is accommodated.

The battery cell 10 may include a cap plate 17 covering (e.g., sealing) an opening in the case 15, and the case 15 and the cap plate 17 may each include (or be formed of) a conductive material. Further, a first terminal 11 and a second terminal 12, respectively electrically connected to the positive electrode 211 or the negative electrode 212, may be installed to protrude outwardly by penetrating (or be extending through) the cap plate 17.

In some embodiments, outer circumferential surfaces of upper pillars of the first terminal 11 and the second terminal 12 protruding outwardly from the cap plate 17 may be threaded and fixed to the cap plate 17 with nuts.

However, the present disclosure is not limited thereto, and the first terminal 11 and the second terminal 12 each may have a rivet structure to be riveted to the cap plate 17 or may be welded to the cap plate 17.

In some embodiments, the cap plate 17 may include a thin plate to be joined to the opening in the case 15, and the cap plate 17 may have an electrolyte injection port 14, in which a sealing plug may be installed, and a vent portion 13 having a notch.

The first terminal 11 and the second terminal 12 may be electrically connected to a current collector including a first current collector 240 and a second current collector 250 (hereinafter referred to as a positive electrode current collector and a negative electrode current collector, respectively) welded to a positive electrode non-coated portion 211a or a negative electrode non-coated portion 212a.

In some embodiments, the first terminal 11 and the second terminal 12 may be joined to the positive electrode current collector 240 and the negative electrode current collector 250 by welding. However, the present disclosure is not limited thereto, and the first terminal 11 and the second terminal 12 and the positive electrode current collector 240 and the negative current collector 250 may be made by bonding integrally (e.g., may be integrally formed).

In some embodiments, an insulation member may be installed between the electrode assembly 210 and the cap plate 17. In such an embodiment, the insulation member may include a first lower insulation member 260 and a second lower insulation member 270, and each of the first lower insulation member 260 and the second lower insulation member 270 may be installed between the electrode assembly 210 and the cap plate 17.

In some embodiments, an end of a separation member, which may be installed facing a side surface of the electrode assembly 210, may be installed between the insulation member and the first terminal 11 and the second terminal 12, and the separation member may include a first separation member 280 and a second separation member 290. Therefore, an end of the first separation member 280 and an end of the second separation member 290, each of which may be installed facing a side surface of the electrode assembly 210, may be installed between the first lower insulation member 260 and the second lower insulation member 270 and the first terminal 11 and the second terminal 12.

The first terminal 11 and the second terminal 12 welded to the positive electrode current collector 240 and the negative electrode current collector 250 may be coupled to the first lower insulation member 260 and the second lower insulation member 270 and the end of the first separation member 280 and the end of the second separation member 290, respectively.

In an embodiment, the device 1 for measuring pressure of a battery cell may further include an explosion induction device for inducing an explosion of the battery cell 10. In some embodiments, the explosion induction device may be intended to cause thermal runaway by raising the temperature of the battery cell 10 by direct or indirect heating.

The explosion induction device may apply heat to the battery cell 10 to simulate a thermal runaway situation and to cause the battery cell 10 to reach an explosion (or ignition) temperature, thereby inducing gas release. The heat to be applied to the battery cell 10 to reach the explosion temperature may be determined by considering the type, condition, capacity, or the like of the battery cell 10.

Measuring the pressure of a battery cell may include inducing a thermal explosion of the battery cell 10 through the explosion induction device. Based on the measuring, a battery module and pack having improved volumetric efficiency and enhanced stability through measurement of the released gas and evaluation of the characteristics of a thermal runaway phenomenon may be provided.

The lower substrate 300 may be used for mounting and fixing the battery cell 10 during a pressure measurement process. The lower substrate 300 may be designed to withstand shock, vibration, pressure, or the like occurring when the battery cell 10 explodes. The lower substrate 300 may include a material having high durability and rigidity, such as stainless steel, but is not limited thereto. A position of the lower substrate 300 may determine a position of a lower plate during subsequent manufacturing of a battery module.

A second load cell 310 may be positioned on the lower substrate 300. The second load cell 310 may be positioned between the upper surface of the lower substrate 300 and the lower surface of the battery cell 10 to measure, in real time, the weight of the battery cell 10 or the load applied to the lower substrate 300, both of which change during the explosion and gas release of the battery cell 10. The second load cell 310 may obtain (e.g., may measure and/or determine) the pressure applied to the lower substrate 300 and may obtain a load change amount, a load change rate over time, pressure, flow velocity, or the like.

The device 1 for measuring pressure of a battery cell may measure the force applied to the lower substrate 300 due to thermal runaway through the second load cell 310, thereby facilitating manufacturing a battery module and pack with optimized capacity density and stability.

The upper substrate 200 may be positioned on (e.g., above) the lower substrate 300. The upper substrate 200 may be connected to the lower substrate 300 through the connection shaft 100 and may form a space between (e.g., may be spaced apart from) the upper substrate 200 and the battery cell 10.

A first load cell 220 may be positioned on the upper substrate 200. The first load cell 220 may measure the force applied to the upper substrate 200 and may measure the load applied to the upper substrate 200 in real time during the explosion and gas release of the battery cell 10. The first load cell 220 may obtain a load change amount, a load change rate over time, pressure, flow velocity, or the like and may determine the height of the upper substrate 200 to ensure an upper space, which is a space between the battery cell 10 and the upper substrate 200. The height of the upper substrate 200 may determine the height of an upper plate during the subsequent manufacturing of a battery module, thereby manufacturing a battery module or pack with improved capacity per unit volume and stability.

The connection shaft 100 may be vertically coupled to the upper substrate 200 and the lower substrate 300 and may support the upper substrate 200. The connection shaft 100 may be connected and fixed to prevent the upper substrate 200 and a lower base from shaking or detaching even when the battery cell 10 explodes.

The length of the connection shaft 100 may determine the positions and heights of the upper substrate 200 and the lower substrate 300 and a distance between the upper substrate 200 and the battery cell 10. The length of the connection shaft 100 may determine the distance between an upper plate and a lower plate during the subsequent manufacturing of a battery module, thereby manufacturing a battery module and pack having improved volume efficiency and stability.

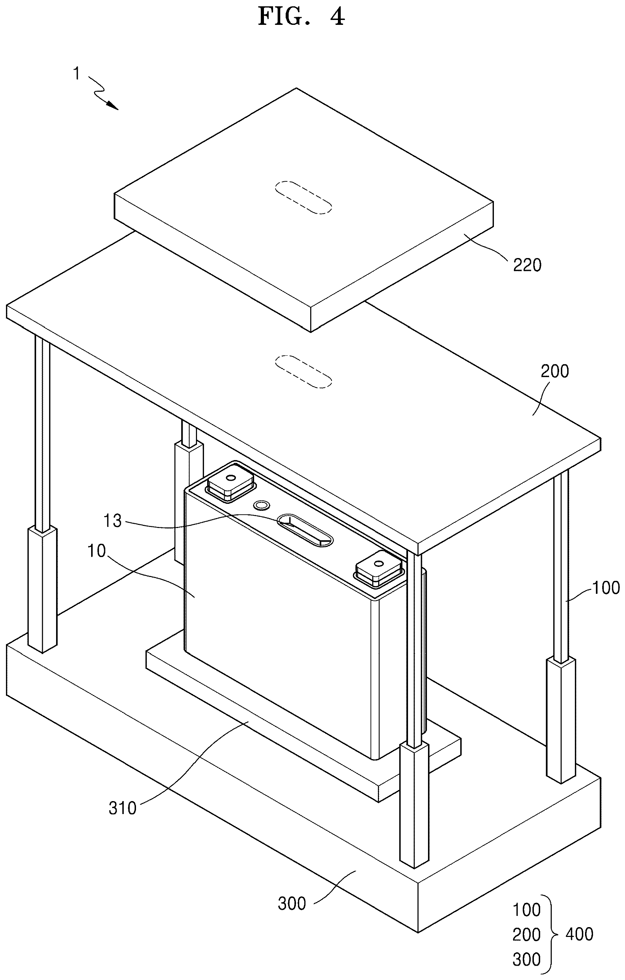

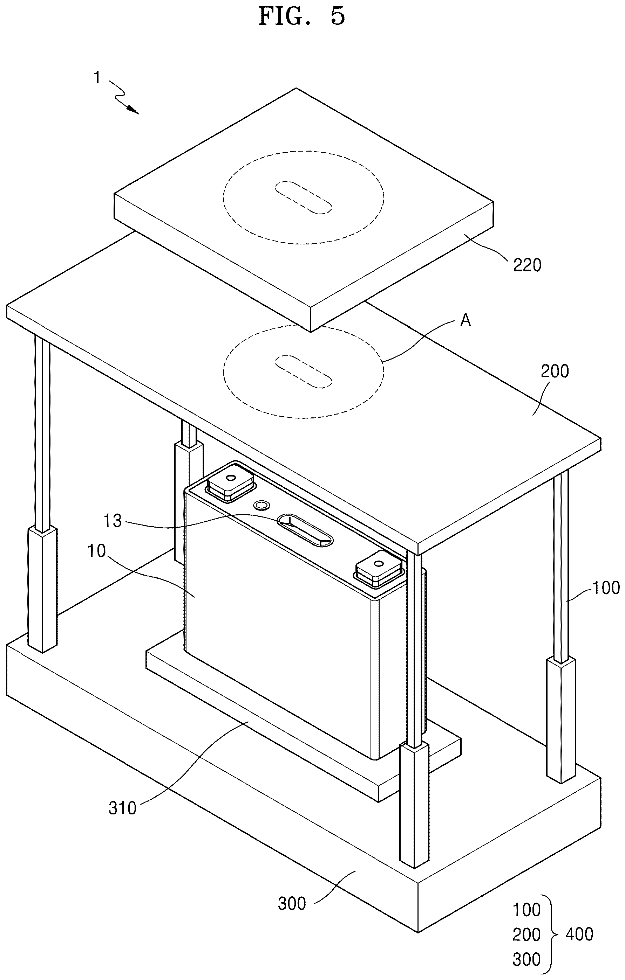

FIGS. 4 and 5 illustrate a device for measuring pressure of a battery cell according to another embodiment of the present disclosure.

Referring to FIGS. 4 and 5, the battery cell 10 arranged in the device 1 for measuring pressure of a battery cell may include a vent portion 13 positioned on (e.g., formed in or on) the upper surface of the battery cell 10. The vent portion 13 may be an area through which gas and heat, which are generated inside the battery cell 10 due to repeated charging and discharging, are released to the outside. The vent portion 13 may reduce heat transfer to other cells and reduce fire risk of the battery cell 10 by forming a flow path for gas release and heat exposure and may improve the stability of the battery cell 10.

The first load cell 220 may be positioned on the same vertical line as (e.g., may be vertically aligned with) the vent portion 13 of the battery cell 10. When the battery cell 10 explodes, the vent portion 13 may be fractured or opened (e.g., may burst) due to the high-temperature and high-pressure gas, and the released gas and emitted flame may diffuse in all directions from the center of the vent portion 13. The first load cell 220 may measure the load of gas released from the vent portion 13. The first load cell 220 may be positioned on the same vertical line as (e.g., may be vertically aligned with) the center of the vent portion 13, where pressure and impact are concentrated, to measure the maximum load of the released gas.

The device 1 for measuring pressure of a battery cell may measure the force caused by gas released during thermal runaway through the first load cell 220, and by taking this into consideration, a battery module and pack having optimized capacity density and stability may be manufactured.

The first load cell 220 may be positioned on the upper surface of the upper substrate 200. The upper substrate 200 may be positioned between the vent portion 13 of the battery cell 10 and the first load cell 220 to prevent direct contact and interaction between the first load cell 220 and the released gas. Accordingly, the upper substrate 200 may prevent the first load cell 220 from being deformed, damaged, or broken due to excessive pressure or high-temperature. The upper substrate 200 may protect the first load cell 220 from flame and may include an insulation material for blocking or reducing conduction or diffusion of heat.

The first load cell 220 may measure, in real time, the load applied to the upper substrate 200 during the explosion and gas release of the battery cell 10. The first load cell 220 may obtain a load change amount, a load change rate over time, pressure, flow velocity, or the like and may determine the height of the upper substrate 200 for delaying or preventing diffusion of gas and byproducts released during thermal runaway and heat transfer. The height of the upper substrate 200 may be the height of an upper plate during subsequent manufacturing of a battery module. In the case of a battery module or a pack, which is designed based on the determined height of the upper substrate 200 or the upper plate, a chain reaction of fire may be prevented and capacity density per unit volume is increased, thereby improving stability and volume efficiency.

An area of the upper substrate 200 may be deformed or burned due to high-temperature heat and gas released from the battery cell 10. A damaged area A at where the upper substrate 200 is deformed or burned may be, for example, an area extending in all directions from the center of the vent portion 13. The upper substrate 200, which is damaged, may be provided to be replaceable, and the height of the upper substrate 200 for an optimized upper space may be obtained by repeating the thermal runaway simulation.

The first load cell 220 may have a larger area than the damaged area A of the upper substrate 200. The first load cell 220 may measure the mechanical load, based on the area and location, which is applied to the upper substrate 200 due to sudden gas release and flame emission from the battery cell 10 and may obtain the pressure through the area of the damaged area A. The height of the upper substrate 200 may be determined to be (e.g., may be measured and/or adjusted to be) an optimized height by taking into consideration the force or pressure measured by the first load cell 220 to reduce the risk of the spread of heat transfer and thermal runaway in a manufactured battery module or pack.

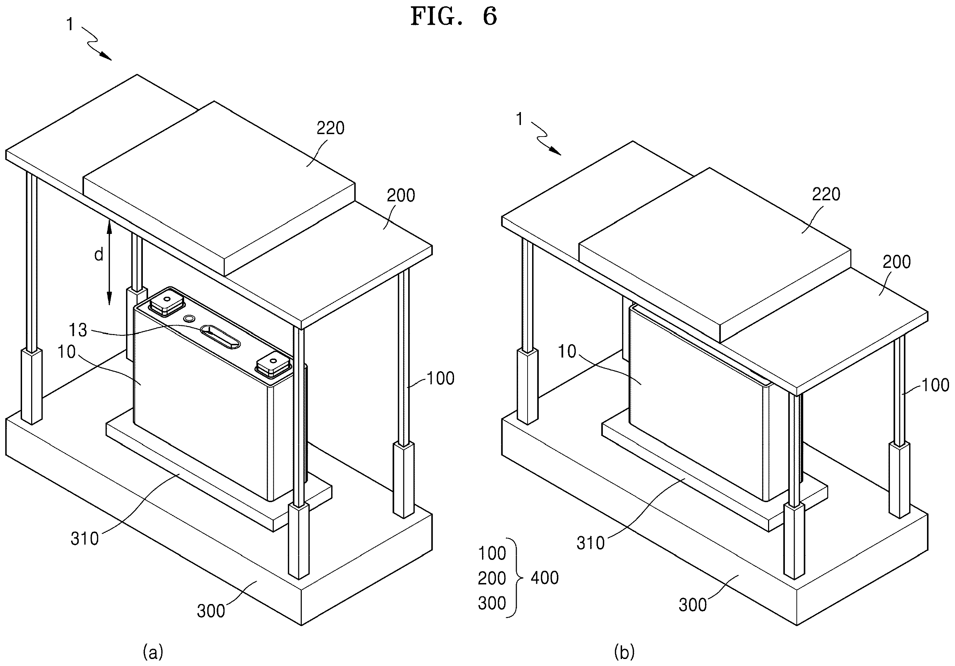

FIG. 6 is an illustration describing an operation of a connection shaft of a device for measuring pressure of a battery cell according to another embodiment of the present disclosure.

Referring to FIG. 6, the connection shaft 100 of the device 1 may connect the upper substrate 200 to the lower substrate 300 and may support both substrates. The connection shaft 100 may be designed to withstand shock, vibration, pressure, or the like occurring when the battery cell 10 explodes. The connection shaft 100 may include a material having high durability and rigidity, such as stainless steel, but is not limited thereto.

The connection shaft 100 may be adjustable in length along a vertical direction. The connection shaft 100 may be vertically coupled to the upper substrate 200 and the lower substrate 300, and the positions and heights of the upper substrate 200 and the lower substrate 300 may be controlled by adjusting the length of the connection shaft 100. The positions of the upper substrate 200 and the lower substrate 300 may determine the positions of an upper plate and a lower plate during subsequent manufacturing of a battery module.

If a separation distance between the upper substrate 200 and the lower substrate 300 is less than a reference (or target) distance, unnecessary pressure may be applied to the battery cell 10, and heat may not be released smoothly or air may not flow smoothly, thereby shortening the lifespan of the battery cell 10. Conversely, if the separation distance between the upper substrate 200 and the lower substrate 300 exceeds a reference (or target) distance, the size and volume of the battery module may increase, reducing the energy density and potentially causing defects in the electrical connection or cooling system.

For example, the connection shaft 100 may determine the positions of the upper substrate 200 and the lower substrate 300 and may provide improved performance, stability, and lifespan of the battery cell 10.

The connection shaft 100 may control the distance between the upper substrate 200 and the battery cell 10 by adjusting the length of the connection shaft 100 along the vertical direction. A separation distance d between the upper substrate 200 and the battery cell 10 may determine a separation distance between an upper plate and a battery cell in a battery module or pack.

In some embodiments, the separation distance d between the upper substrate 200 and the battery cell 10 may be in a range of about 5 mm to about 20 mm.

If the separation distance d between the upper substrate 200 and the battery cell 10 is less than about 5 mm, high-temperature heat and gas may spread to the surrounding components, and damage to the battery cell 10 as well as to adjacent components may occur or a chain reaction of fire may occur. In some embodiments, when an upper space is insufficient, it may be difficult to secure a space necessary for expansion of the battery cell 10, and excessive pressure may be applied, resulting in physical deformation or damage to the battery cell 10.

If the separation distance d between the upper substrate 200 and the battery cell 10 exceeds about 20 mm, a manufactured battery module or pack may have an increased volume per unit capacity. In some embodiments, it may be difficult to maintain alignment of the battery cell 10 or to protect the battery cell 10 from shock or vibration.

The connection shaft 100, according to an embodiment, is provided such that it allows for length adjustment, thereby delaying or preventing temperature rise and an occurrence of an additional event and increasing energy capacity density. Accordingly, stability may be improved and space efficiency may be improved during manufacturing of a battery module or pack.

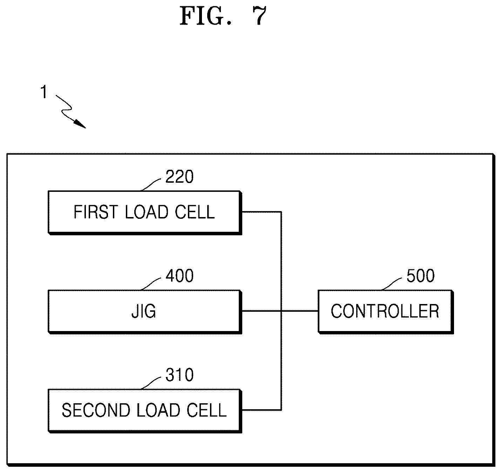

FIG. 7 is a block diagram of a device for measuring pressure of a battery cell according to another embodiment of the present disclosure.

Referring to FIG. 7, the device 1 for measuring pressure of a battery cell may further include a controller 500 which calculates the height of an upper substrate from the force measured by the first load cell 220 and the second load cell 310.

The controller 500 may calculate the height of the upper substrate based on information measured by the first load cell 220 and the second load cell 310, such as force, a load change amount, a load change rate over time, pressure, flow velocity, or the like. The height of the upper substrate calculated by the controller 500 may be a height that may provide an optimized upper space considering capacity density and stability.

In some embodiments, the height of the upper substrate may be a height which may delay or prevent a thermal runaway phenomenon, which is a chain reaction explosion caused by heat transfer, while ensuring maximum capacity per unit volume of a battery module or pack.

The controller 500 may adjust the length of the connection shaft based on the calculated height of the upper substrate. The controller 500 may extend or shorten the connection shaft whose length may be adjusted along the vertical direction and may control the separation distance between the upper substrate and the lower substrate or the separation distance between the upper substrate and the battery cell.

In one embodiment, the controller 500 may calculate the height of the upper substrate according to Equation 1.

Equation 1:

$$\frac{\partial u}{\partial t} + (u \cdot \nabla)u = -\frac{1}{\rho}\nabla\overline{p} + v\nabla^2 u + \frac{1}{3}v\nabla(\nabla \cdot u) + g$$

Equation 1 is the Navier-Stokes Equation, which is an equation for describing the flow of viscous fluid. In Equation 1, u is the velocity of the fluid, $\rho$ is the density, p is the pressure, v is the kinematic viscosity, which is the dynamic viscosity divided by the density, and g is the acceleration of gravity.

The first load cell 220 and the second load cell 310 may measure the load applied to the upper substrate and the lower substrate in real time during the explosion and gas release from the battery cell. The controller 500 may model the motion of the fluid by using the force information measured by the first load cell 220 and the second load cell 310 and the Navier-Stokes Equation, thereby predicting the instantaneous flow of the fluid in a thermal runaway situation.

In some embodiments, the first and second load cells 220, 310 may measure parameters such as density $\rho$, pressure P and gravitational load G. The velocity and viscosity-related terms of the fluid (u, v) as well as the time derivative ($\partial u/\partial t$) may be provided to the controller 500 as predicted or predefined constant values. Based on these inputs, the controller 500 may apply the Navier-Stokes Equation to calculate the minimum lifting distance of the upper substrate 200 or the jig 400, including a safety margin, such that the resulting load does not exceed the allowable load.

In some embodiments, the controller 500 may obtain a flow rate from the load change amount of the battery cell based on gas release, which is measured by the first load cell 220 and the second load cell 310. In some embodiments, the first load cell 220 may measure the decreasing weight of the battery cell, and the controller 500 may calculate the volume of the released gas from the weight loss, by using the density and molecular weight of the gas and obtain the flow rate.

In some embodiments, the controller 500 may obtain pressure change from the load applied to the upper substrate and the lower substrate, as measured by the first load cell 220 and the second load cell 310. In some embodiments, the second load cell 310 may measure the load applied to the upper substrate due to the released gas, and the controller 500 may obtain the pressure by considering the area of the upper substrate including the damaged area.

In some embodiments, the controller 500 may obtain the density change and density distribution based on the expansion of gas rapidly released in a high-temperature and high-pressure environment, and the diffusion direction and speed of the fluid through the information of the force measured by the first load cell 220 and the second load cell 310.

The controller 500 may define the relationship between the velocity, density, pressure, and viscosity of the fluid by using the Navier-Stokes Equation, thereby predicting the flow of the fluid.

In some embodiments, the controller 500 may predict the flow of the fluid by considering the concentration area, time to reach maximum flow velocity, diffusion distance of the fluid, and specifically predict the rapid rise and diffusion of low-density, high-temperature gas, the flow direction of gas due to pressure difference, or the like. In some embodiments, the controller 500 may model the movement of the fluid by considering changes in the gas release rate and amount over time, the type and chemical properties of the released gas, the type and capacity of the battery cell, or the like, thereby predicting the instantaneous flow of the fluid.

The controller 500 may control an operation of a jig 400 by utilizing the predicted flow of the fluid to perform thermal runaway simulation. In some embodiments, the controller 500 may adjust the length of the connection shaft by calculating the height of the upper substrate for the optimization design considering volume efficiency and stability.

The device 1 for measuring pressure of a battery cell of an embodiment may analyze and predict the flow of the gas released during a thermal event through the controller 500. The controller 500 may calculate the height of the upper substrate to prevent fire and fire spread in the battery cell and provide a structure capable of preventing or minimizing thermal runaway to improve the energy density and stability of a battery module or pack.

According to embodiments of the present disclosure, the height of an upper plate for an upper space that is optimized for capacity density and stability may be controlled (e.g., may be determined), and a battery module and pack manufactured by using the determined height may have improved volume efficiency and delayed or prevented heat transfer, thereby improving the volume efficiency and stability of the battery module or pack.

However, aspects and features of the present disclosure are not limited to the those described above, and other aspects and features not mentioned will be clearly understood by those skilled in the art from the description of the present disclosure.

Although the present disclosure has been described above with respect to example embodiments and drawings, the present disclosure is not limited thereto. A person of ordinary skill in the art would understand that various modifications and variations are possible within the scope of the technical idea, aspects, and features of the present disclosure and the scope of the claims described below.

## Claims

1. A device (1) for measuring pressure of a battery cell (10), the device (1) comprising:

   a lower substrate (300) configured to accommodate a battery cell (10) thereon;
   an upper substrate (200) spaced apart from the lower substrate (300);
   a connection shaft (100) vertically coupling the lower substrate (300) and the upper substrate (200); and
   a first load cell (220) configured to measure force applied to the upper substrate (200).

2. The device (1) for measuring pressure of a battery cell (10) of claim 1, wherein, during use of the device (1), a battery cell (10) with a vent portion (13) on an upper surface thereof is placed on the lower substrate (300), wherein the first load cell (220) is vertically alignable with the vent portion (13) or vice versa.

3. The device (1) for measuring pressure of a battery cell (10) of claim 1 or 2, wherein the connection shaft (100) is adjustable in length.

4. The device (1) for measuring pressure of a battery cell (10) of and of claims 1 to 3, wherein the first load cell (220) is on an upper surface of the upper substrate (200).

5. The device (1) for measuring pressure of a battery cell (10) of any of claims 1 to 4, further comprising a second load cell (310) configured to measure force applied to the lower substrate (300).

6. The device (1) for measuring pressure of a battery cell (10) of claim 5, wherein the second load cell (310) is on an upper surface of the lower substrate (300).

7. The device (1) for measuring pressure of a battery cell (10) of claim 5 or 6, further comprising a controller (500) configured to calculate a height of the upper substrate (200) by using the force measured by the first load cell (220) and the force measured by the second load cell (310).

8. The device (1) for measuring pressure of a battery cell (10) of claim 7, wherein the controller (500) is configured to calculate a height of the upper substrate (200) by using the Navier-Stokes Equation.

9. The device (1) for measuring pressure of a battery cell (10) of claim 8, wherein the controller (500) is configured to calculate the height of the upper substrate (200) by using the Navier-Stokes Equation based on values measured by the load cells (220, 310) and inputted or predicted values.

10. The device (1) for measuring pressure of a battery cell (10) of any of claims 7 to 9, wherein the controller (500) is configured to adjust a length of the connection shaft (100) based on the calculated height of the upper substrate (200).

11. The device (1) for measuring pressure of a battery cell (10) of any of claims 7 to 10, comprising:
   a jig (400) configured to mount a battery cell (10) thereon, the jig (400) comprising:

   the lower substrate (300);
   the upper substrate (200) above the lower substrate (300);
   the first load cell (220) on the upper substrate (200); and
   the second load cell (310) on the lower substrate (300) and configured to measure a weight of the battery cell (10); and
   the connection shaft (100) connecting the lower substrate (300) to the upper substrate (200).

12. The device (1) for measuring pressure of a battery cell (10) of any of claims 1 to 11, wherein, when a battery cell (10) is placed on the lower substrate (300) during use of the device (1), a separation distance between the battery cell (10) and the upper substrate (200) is in a range of 5 mm to 20 mm.

13. The device (1) for measuring pressure of a battery cell (10) of claim 11 or 12, wherein the upper substrate (200) is configured to be replaceable.

# FIG. 1

# FIG. 2

FIG. 3

# FIG. 4

# FIG. 5

FIG. 6

(a)

(b)

# FIG. 7

Europäisches
Patentamt

European
Patent Office

Office européen
des brevets

**EUROPEAN SEARCH REPORT**

Application Number

EP 25 22 1666

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 114 902 466 A (LG ENERGY SOLUTION LTD) 12 August 2022 (2022-08-12) * abstract * * figure 11 * | 1-6,12, 13 | INV. G01L5/00 H01M10/42 |
| X | KR 2021 0055363 A (LG CHEMICAL LTD [KR]) 17 May 2021 (2021-05-17) * paragraphs [0045], [-0048] * * figure 1 * | 1-6,12, 13 | |
| X | CN 119 069 867 A (SAMSUNG SDI CO LTD) 3 December 2024 (2024-12-03) * figure 1A * | 2 | |
| A | CN 111 684 646 B (LG CHEMICAL LTD) 15 August 2023 (2023-08-15) * paragraph [0044] * * figure 1 * | 7-11 | |

TECHNICAL FIELDS SEARCHED (IPC)

G01L
H01M

The present search report has been drawn up for all claims

| Place of search | Date of completion of the search | Examiner |
|---|---|---|
| The Hague | 8 April 2026 | Grewe, Clemens F. |

EPO FORM 1503 03.82 (P04C01)

## ANNEX TO THE EUROPEAN SEARCH REPORT
## ON EUROPEAN PATENT APPLICATION NO.

EP 25 22 1666

This annex lists the patent family members relating to the patent documents cited in the above-mentioned European search report.
The members are as contained in the European Patent Office EDP file on
The European Patent Office is in no way liable for these particulars which are merely given for the purpose of information.

08-04-2026

| Patent document cited in search report | | Publication date | Patent family member(s) | | Publication date |
|---|---|---|---|---|---|
| CN 114902466 | A | 12-08-2022 | CN | 114902466 A | 12-08-2022 |
| | | | EP | 4080643 A1 | 26-10-2022 |
| | | | JP | 7346789 B2 | 20-09-2023 |
| | | | JP | 2023503605 A | 31-01-2023 |
| | | | KR | 20210150215 A | 10-12-2021 |
| | | | US | 2023025923 A1 | 26-01-2023 |
| | | | WO | 2021246654 A1 | 09-12-2021 |
| KR 20210055363 | A | 17-05-2021 | NONE | | |
| CN 119069867 | A | 03-12-2024 | CN | 119069867 A | 03-12-2024 |
| | | | EP | 4471918 A1 | 04-12-2024 |
| | | | KR | 20240171471 A | 09-12-2024 |
| | | | US | 2024405325 A1 | 05-12-2024 |
| CN 111684646 | B | 15-08-2023 | CN | 111684646 A | 18-09-2020 |
| | | | EP | 3734744 A1 | 04-11-2020 |
| | | | KR | 20200046633 A | 07-05-2020 |
| | | | US | 2021025771 A1 | 28-01-2021 |
| | | | WO | 2020085722 A1 | 30-04-2020 |

EPO FORM P0459

For more details about this annex : see Official Journal of the European Patent Office, No. 12/82